# EUROPÄISCHE PATENTANMELDUNG

(11) **EP 0 559 054 A1**
(43) Veröffentlichungstag der Anmeldung: **08.09.1993**
(21) Anmeldenummer: 93102820.3
(22) Anmeldetag: 24.02.1993
(51) Int. Cl.: B60R 25/00

(54) **Diebstahlsicherung für ein Fahrzeug**

(30) Priorität: 29.02.1992 DE 4206388
(71) Anmelder: Lisson, Hugo, D-61279 Grävenwiesbach (DE)
(72) Erfinder: Lisson, Hugo, D-61279 Grävenwiesbach (DE)
(74) Vertreter: Jochem, Bernd, Dipl.-Wirtsch.-Ing.

(57) **Zusammenfassung**

Die Diebstahlsicherung für ein Fahrzeug besteht aus einem nach vorn in eine Sicherungsstellung verfahrbaren Sitz (1), dessen Rückenlehne (2) dabei nach vorn verschwenkt wird. Um Gewicht und konstruktiven Aufwand gering zu halten, ist die Rückenlehne (2) des Sitzes (1) durch seinen Verschiebeantrieb verschwenkbar, indem z. B. ein Festanschlag (12) beim Vorfahren des Sitzes (1) in eine Ausnehmung (11) im Rahmen (14) der Rückenlehne (2) eingreift. Es genügt in diesem Fall eine einziger Verriegelung oder Selbsthemmung im Verschiebeantrieb des Sitzes (1), um auch die Rückenlehne (2) in der Sicherungsstellung zu arretieren.

## Beschreibung

Die Erfindung betrifft eine Diebstahlsicherung für ein Fahrzeug mit wenigstens einem hinter Funktionselementen kraftbetätigt längsverschieblichen Sitz, welcher mit vorgeschwenkter Rückenlehne in eine vorderen Stellung, in welcher ein oder mehrere Funktionselemente unzugänglich und/oder funktionsunfähig sind, gegen unbefugtes Lösen gesichert, arretierbar ist.

Bei herkömmlichen, vom Fahrzeughersteller vorgesehenen Diebstahlsicherungen werden in der Regel die Türen und das Steuerrad eines Fahrzeugs gegen unbefugte Benutzung gesichert. Nach dem unter Umständen auch gewaltsamen Öffnen der Türen können professionelle Diebe durch mechanisches Überdrehen und elektrisches Überbrücken des Zündschlosses ein Fahrzeug in kurzer Zeit in fahrbereiten Zustand versetzen und für die Flucht nutzen. Zusätzliche Sicherungseinrichtungen, wie z. B. mechanische Schlösser, die Bremse und/oder Kupplung mit dem Lenkrad verbinden, ermöglichen nach deren Aufbrechen ebenfalls die Nutzung des Fahrzeugs, haben aber darüberhinaus den weiteren Nachteil, daß die Sicherungseinrichtung jedesmal oft in umständlicher Weise anzubringen und zu entfernen ist. Weitere Funktionselemente des Fahrzeugs, wie z. B. ein Radio, ein Cassettenabspielgerät oder das Handschuhfach, müssen eigenständig gesichert werden.

Es ist aus der DE 29 08 611 A1 und der DE 27 35 782 A1 auch bereits bekannt, zur Diebstahlsicherung eines Fahrzeugs den Fahrersitz in eine vordere Stellung vorzuschieben oder kraftbetätigt vorzufahren, die Rückenlehne nach vorn zu schwenken und den Sitz in dieser Stellung, in welcher niemand hinter dem Steuerrad Platz nehmen und fahren kann, zu arretieren.

Der Erfindung liegt die Aufgabe zugrunde, eine Diebstahlsicherung der zuletzt genannten Art dahingehend weiterzuentwickeln, daß mit nur minimalem zusätzlichen Aufwand und minimaler Vergrößerung des Fahrzeuggewichts die Funktion der Sicherungseinrichtung automatisiert werden kann.

Vorstehende Aufgabe wird erfindungsgemäß dadurch gelöst, daß die Rückenlehne des Sitzes durch seinen Verschiebeantrieb verschwenkbar ist.

Die Erfindung bietet zunächst den Vorteil, daß es keines besonderen, mit zusätzlicher Gewichtsbelastung verbundenen Antriebs für die Rückenlehne bedarf. Gleichzeitig wird aber durch den erfindungsgemäßen Vorschlag noch der weitere Vorteil erzielt, daß es bei einer Koppelung der Bewegungsantriebe für die Sitzverschiebung und das Verschwenken der Rückenlehne auch nur eines einzigen gegen unbefugtes Lösen zu sichernden Arretierungsmechanismus oder Antriebsteils mit Selbsthemmung bedarf, um alle Teile des Sitzes in der vorderen Sicherungsstellung zu halten.

Möglicherweise war es bisher unvorstellbar, das Verschwenken der Rückenlehne mit der Sitzverschiebung zu koppeln, weil der Sitz und die Rückenlehne für die Fahrt unabhängig voneinander individuell eingestellt werden müssen. Diese Sitzpositionierung braucht jedoch der vorgeschlagenen Verbindung des Verschiebeantriebs des Sitzes mit dem Schwenkantrieb der Rückenlehne bei der Bewegung in die vordere Sicherungsstellung und beim Zurückstellen in die normale Ausgangsstellung nicht entgegenzustehen. Der Sitz wird nämlich, um in die Sicherungsstellung zu gelangen, über den normalen Verstellbereich hinaus weiter nach vorn vorgefahren, und es kann z. B. vorgesehen sein, daß erst in dem vor dem normalen Verstellbereich liegenden Bereich ein Eingriff in Antriebsorgane erfolgt, durch welche die Rückenlehne verstellbar ist. Außerdem bereitet es keine Schwierigkeiten, den Sitz auf einem Schlitten längsverschieblich zu lagern, der seinerseits längsverschieblich auf dem Boden gelagert ist, so daß die normale Sitzverstellung für die Fahrt völlig unabhängig sein kann von der Verschiebbarkeit zur Sicherung des Fahrzeugs. In entsprechender Weise könnte auch die Rückenlehne auf zwei voneinander unabhängigen Schwenklagern gelagert sein, wovon eines für die normale Sitzverstellung und das andere für die Diebstahlssicherung benutzt wird. Es ist in diesem Fall lediglich dafür Sorge zu tragen, daß durch die Verriegelungseinrichtung in der Sicherungsstellung auch die normalen Verstellbewegungen blockiert werden oder z. B. die Betätigungshebel unzugänglich sind.

Alternativ könnte vorgesehen sein, daß die Rückenlehne bei der normalen Sitzverstellung und bei der Verstellung in die Sicherungsposition um dieselbe Achse schwenkbar ist, beim Verschieben des Sitzes aber ein Eingriff in Antriebsorgane zum Verschwenken der Rückenlehne nur erfolgt, wenn der auf einem verfahrbaren Schlitten längsverschieblich gelagerte Sitz auf derjenigen der beiden Längsführungen verfahren wird, die zur Bewegung in die Sicherungsstellung dient.

Bei Verwendung eines Sitzes, der längsverschieblich auf einem Schlitten gelagert ist, welcher seinerseits längsverschieblich auf dem Fahrzeugboden geführt ist, wird zweckmäßigerweise diejenige Führung, welche zur Einstellung der Sicherungsposition benutzt wird, unter einem spitzen Winkel schräg zur Fahrzeuglängsrichtung angeordnet, so daß der Sitz beim Vorfahren mit einer bestimmten seitlichen Komponente bewegt wird, um nicht gegen den sich normalerweise nach vorn verbreiternden Kardantunnel bzw. eine Mittelkonsole zu stoßen.

In besonders einfacher Ausführung der Erfindung ist die Rückenlehne des Sitzes mit einem sich nach unten über ihr Schwenklager hinaus erstreckenden Vorsprung versehen, in dem eine Ausnehmung vorhanden ist, und am Fahrzeugboden ist ein Festanschlag bzw. Halteteil, z. B. in Form eines horizontal gelagerten Bolzens, angebracht, welcher beim Vorschieben des Sitzes in die Sicherungsposition mit der Ausnehmung in Eingriff kommt, beim weiteren Vorschieben den Vorsprung festhält und dadurch die Rückenlehne nach vorn verschwenkt und beim Zurückfahren des Sitzes die Rückenlehne auch wieder aufrichtet. Der Festanschlag und die mit ihm zusammenwirkende Ausnehmung können so gestaltet sein, daß sie sich in der Sicherungsposition in einer hakenähnlichen Eingriffsstellung befinden, welche das Abreißen des Sitzes nach oben verhindert.

Es leuchtet ohne weiteres ein, daß bei der vorstehend geschilderten Ausführung auch die Rückenlehne nicht zurückschwenkbar ist, wenn nur der Sitz in seiner vorderen Sicherungsstellung unlösbar arretiert ist. Dies kann z. B. durch Arretierungsbolzen geschehen, die nach Erreichen der Sicherungsstellung automatisch in eine Arretierstellung geschoben oder geschwenkt werden, in welcher sie den Sitz relativ zu seiner Längsführung festlegen. Alternativ kann aber auch die Selbsthemmung bestimmter Antriebe für die Arretierung des Sitzes ausgenutzt werden. Wenn der Sitz z. B. durch einen Motor über eine Gewindespindel und Mutter mit Selbsthemmung verfahren wird, bedarf es keiner Verriegelung mehr, wenn dafür gesorgt ist, daß sich der Antriebsmotor von Unbefugten nicht einschalten läßt. Derselbe Antriebsmotor, welcher auf die Gewindespindel wirkt, könnte bei einer anderen Ausführungsform der Erfindung auch gleichzeitig z. B. über ein Schneckengetriebe mit Selbsthemmung auf die Rückenlehne wirken, um diese gegen das Lenkrad vorzuschwenken.

Wenn man davon ausgeht, daß die Fahrzeugtüren für Diebe kein unüberwindbares Hindernis sind, sollte das Aufschwenken der Fahrzeugtüren auch nicht das Zurückschieben des Fahrersitzes aus der Sicherungsposition steuern. In bevorzugter praktischer Ausführung der Erfindung ist deshalb vorgesehen, daß in den Sitz Sensoren angeordnet sind, welche eine Belastung des Sitzes durch Gegenstände oder Personen registrieren, daß nach dem Verlassen des Sitzes oder beim Abschließen einer Fahrzeugtür der Sitz automatisch in die arretierte Stellung bewegbar ist, und daß der arretierte Sitz durch Entriegeln einer Fahrzeugtür oder eines im Fahrzeuginnenraum angebrachten elektronischen Schlosses mittels eines Schlüssels mit Magnetkontakten oder mittels eines Datenträgers entriegelbar und zurückbewegbar ist. Nur wenn auf diese Weise eine Fahrzeugtür ordnungsgemäß geöffnet wird, gibt auch der Fahrersitz das Lenkrad und die Pedale frei.

Noch weitergehende Sicherheit kann dadurch gewonnen werden, daß durch den Sitz in seiner arretierten Stellung das Bremssystem und/oder die Stromversorgung des Fahrzeugs z. B. derart beeinflußt werden, daß die Räder gebremst sind und das Zündsystem abgeschaltet ist.

Die Erfindung wird nachstehend anhand der Ausführungsbeispiele unter Bezugnahme auf die beigefügte Zeichnung im Detail beschrieben.

Es zeigen:
- Fig. 1: ein erstes Ausführungsbeispiel eines in eine Sicherungsstellung verfahrbaren Sitzes mit Führungsmitteln zum Vorklappen der Rückenlehne beim Vorfahren des Sitzes,
- Fig. 2: das Ausführungsbeispiel gemäß Fig. 1 mit dem Sitz und der Rückenlehne in Sicherungsstellung,
- Fig. 3: ein weiteres Ausführungsbeispiel eines in Sicherungsstellung arretierten Sitzes,
- Fig. 4: einen Schnitt durch an der Rückenlehne des Sitzes nach Fig. 3 angebrachte Betätigungsorgane zum Lösen der Arretierung,
- Fig. 5: einen Längsschnitt durch die Schwenkachse der Rückenlehne des Sitzes nach Fig. 3 mit einer Arretierungsvorrichtung,
- Fig. 6: einen Querschnitt durch die Arretierungsvorrichtung nach Fig. 5,
- Fig. 7: ein Ausführungsbeispiel eines Sitzes mit einem Spindeltrieb zum Verfahren in Längsrichtung,
- Fig. 8: einen Schnitt durch das Sitzunterteil des Ausführungsbeispiels gemäß Fig. 7 senkrecht zur Fahrtrichtung,
- Fig. 9: einen Schnitt durch das Sitzunterteil und Teile der Rückenlehne des Ausführungsbeispiels gemäß Fig. 1 und 2 senkrecht zur Fahrtrichtung,
- Fig. 10: einen Teilschnitt durch einen Antriebsmechanismus zum Verfahren des Sitzes und durch elektrische und hydraulische Betätigungsorgane,
- Fig. 11: eine schematische Seitenansicht eines Sitzes mit einem Schneckentrieb zur Verstellung der Rückenlehne.

Nachfolgend werden bei der Beschreibung der jeweiligen Ausführungsbeispiele für gleiche Teile dieselben Bezugszeichen verwendet.

Die Diebstahlsicherung erfolgt im wesentlichen durch einen Sitz 1 mit Rückenlehne 2 und Unterteil 3. Der Sitz kann der Fahrer- oder Beifahrersitz des Fahrzeuges 5 sein. Er ist hinter dem Steuerrad 6, dem Brems-, Kupplungs- oder Gaspedal 7 oder weiteren in der Zeichnung nicht dargestellten Funktionselementen, wie z. B. einem Radio, einem Cassettenabspielgerät oder dem Handschuhfach am Boden 4 des Fahrzeuges 5 längsverschieblich gelagert.

Der Sitz 1 kann kraftbetätigt, z. B. motorisch oder durch einen Kraftzylinder, in Längsrichtung des Fahrzeugs bewegt und in einer vorderen Sicherungsstellung, z. B. durch eine in der Zeichnung nicht dargestellte Bremse, einen elektromagnetisch oder hydraulisch betätigbaren Arretierbolzen, eine nachfolgend beschriebene Klinke oder ein Getriebe mit Selbsthemmung, wie z. B. einen Spindeltrieb 9 oder einen Schneckentrieb 10, arretiert werden.

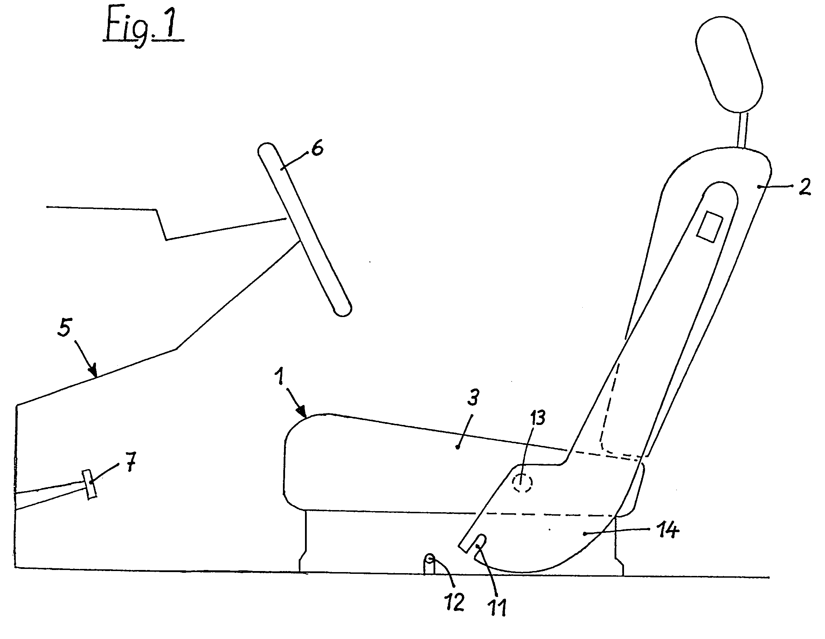

Gemäß Fig. 1 - 3 ist die Rückenlehne 2 des Sitzes 1 schwenkbar an seinem Unterteil 3 gelagert. In der arretiert gesicherten Stellung ist sowohl der Sitz 1 insgesamt nach vorn verschoben als auch die Rückenlehne 2 nach vorn verschwenkt.

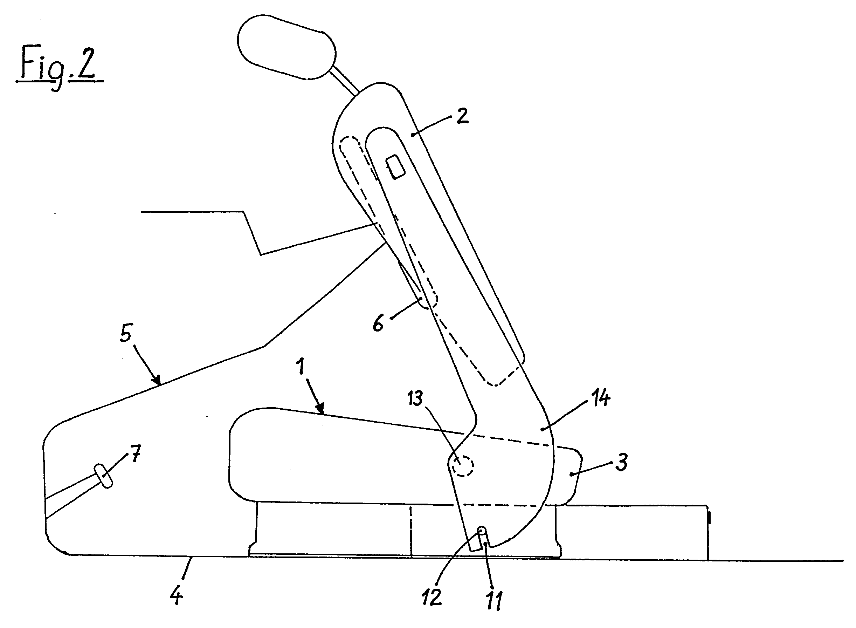

Bei dem in Fig. 1 und 2 dargestellten Ausführungsbeispiel wirken erste Führungsmittel 11 und zweite Führungsmittel 12 zusammen, um bei einer Längsverschiebung des Sitzes 1 in Richtung zu den Funktionselementen 6, 7 hin die Rückenlehne 2 nach vorne zu schwenken. Die ersten Führungsmittel 11 bestehen aus einer länglichen Ausnehmung in einem sich nach unten über das Schwenklager 13 hinaus erstreckenden Vorsprung an einem Rahmen oder einer Halterung der Rückenlehne 2. In die Ausnehmung greift ein am Boden 4 des Fahrzeuges 5 angebrachter Festanschlag, z. B. in Form eines Bolzens 12 ein, wenn der Sitz 1 nach vorn in die in Fig. 2 gezeigte Sicherungsstellung verschoben wird. Durch Krümmung der Ausnehmung 11 kann erreicht werden, daß sie in der Sicherungsstellung nach Fig. 2 den Bolzen 12 nach Art eines Hakens untergreift.

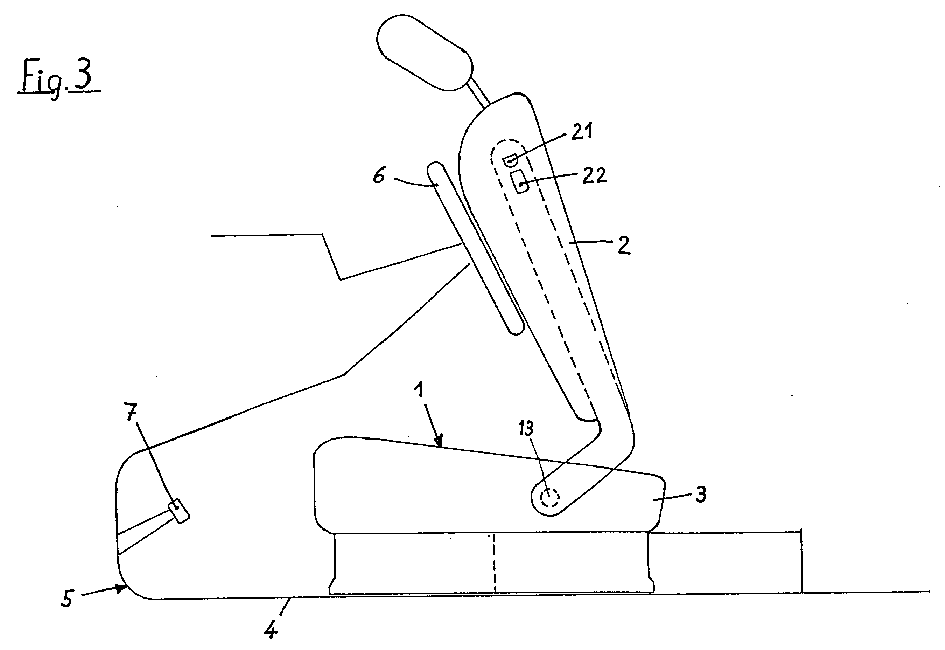

Bei der Ausführung nach Fig. 3 - 6 weist das Gelenk 13 zum Schwenken der Rückenlehne 2 ein äußeres Führungsrohr 15 und ein in diesem koaxial angeordnetes Halterungsrohr 16 auf. Es ist entweder das äußere Rohr oder das innere Rohr mit der Rückenlehne 2 verbunden und drehbar gelagert, wobei jeweils entsprechend das andere Rohr drehfest mit dem Unterteil des Sitzes verbunden ist.

In dem Halterungsrohr 16 ist eine Klinke 8 radial verschieblich, federnd vorgespannt gelagert. Durch eine Ausnehmung im Halterungsrohr 16 greift die Klinke 8, in radialer Richtung hervortretend, in Ausnehmungen 17a oder 17b des Führungsrohrs 15 ein, welche Stellungen der Rückenlehne 2 in Normalposition bzw. im vorgeschwenkten, zu sichernden Zustand entsprechen.

Die Klinke 8 weist eine seitliche Teilverzahnung auf, die mit einer Verzahnung am Außenumfang eines drehbar neben der Klinke 8 gelagerten Hebelelementes 18 in Eingriff steht. Ein Arm des Hebelelementes 18 ist mit einem Bowdenzug 19 verbunden, der im wesentlichen axial innerhalb des Halterungsrohres 16 verläuft und mit weiteren am Rahmen oder der Halterung der Rückenlehne 2 angeordneten Bedienelementen verbunden ist.

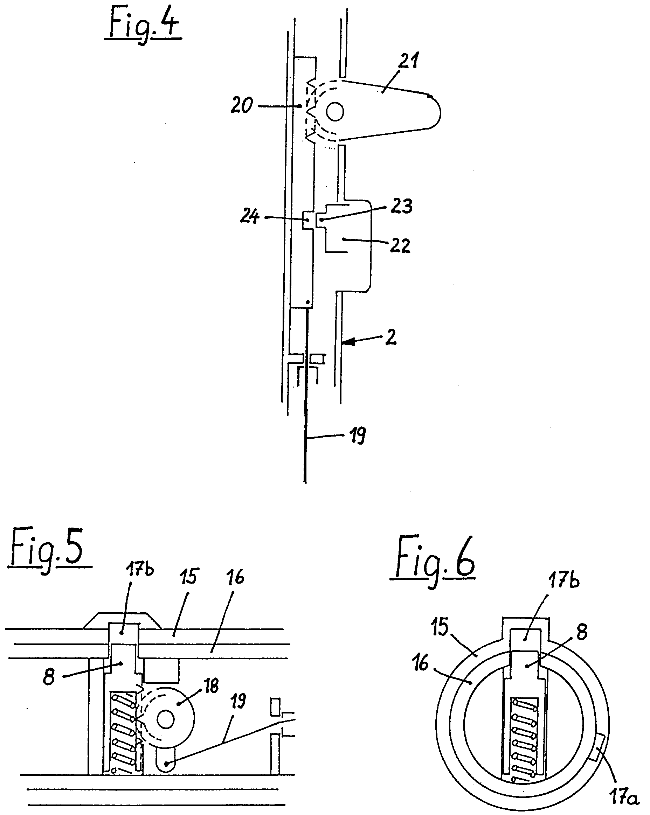

Diese Bedienelemente bestehen beispielsweise gemäß Fig. 4 aus einer längsverschieblich gelagerten Zahnstange 20, in welche ein Entriegelungshebel 21 mit einer Teilverzahnung eingreift.

Der schwenkbar gelagerte Entriegelungshebel 21 überträgt eine Schwenkbewegung über die Zahnstange 20 auf den Bowdenzug 19 in Form einer Zugbewegung, die über das Hebelelement 18 und dessen Verzahnung mit der Klinke 8 zu deren Zurückziehen führt, so daß sie außer Eingriff mit der Ausnehmung 17a des äußeren Rohres 15 gerät und die Rückenlehne 2 verschwenkt werden kann. Diese wird nun so weit vorgeschwenkt, bis die federnd vorgespannte Klinke 8 in die andere Ausnehmung 17b einschnappt, wobei diese andere Ausnehmung des äußeren Rohres so placiert ist, daß dann die Lehne am Lenkrad zum Anliegen kommt. Außer dem Entriegelungshebel 21 oder anstelle von diesem kann ein automatisch betätigbarer Antrieb, z. B. ein Elektromagnet, auf die Zahnstange 20 wirken.

Der Zahnstange 20 gegenüberliegend, unterhalb des Entriegelungshebels 21 ist ein Schloß 22 angeordnet, das in dem die Sicherungsstellung des Sitzes verriegelnden Zustand mit einer Klinke 23 in eine Ausnehmung 24 der Zahnstange 20 eingreift und dadurch die Längsbewegung der Zahnstange 20 verhindert, wodurch die Rückenlehne 2 des Sitzes 1 in der arretierten Stellung gesichert wird und damit auch wegen der Koppelung des Verfahr- und des Verschwenkantriebs der Sitz insgesamt.

In entsprechender oder auf andere bekannte Weise kann auch der Sitz 1 in der vorderen Sicherungsstellung festgelegt und gesichert werden.

Das Schloß 22 kann ein mechanisches oder ein elektronisches Schloß sein, wobei das elektronische Schloß mit Magnetkontakten ausgestattet sein kann oder auf einem Datenträger gespeicherte Daten auslesen kann.

Alternativ können der kraftbetätigte Antrieb der Klinke 8 und ggf. das Schloß 22 in nicht dargestellter, aber an sich bekannter Weise mechanisch oder elektrisch mit den Türschlössern des Fahrzeuges 5 derart verbunden sein, daß mit dem Schließen der Türschlösser des Fahrzeuges 5 die Klinke 8 aus der Ausnehmung 17a gezogen, der Sitz vorgefahren, die Rückenlehne vorgeschwenkt und nach dem Einrasten der Klinke 8 in die Ausnehmung 17b das Schloß 22 verschlossen wird. Es kann dann in entsprechender Weise beim Öffnen eines Türschlosses des Fahrzeugs 5 wieder geöffnet werden, wobei das automatische Öffnen des Schlosses 22 und/oder die automatische Betätigung der Klinke 8 vorzugsweise dann vorgesehen sind, wenn die Türschlösser in einer einbruchsicheren Ausführungsform gefertigt, z. B. durch Magnetkarten, magnetisch kodierte Schlüssel o. dgl., betätigbar sind.

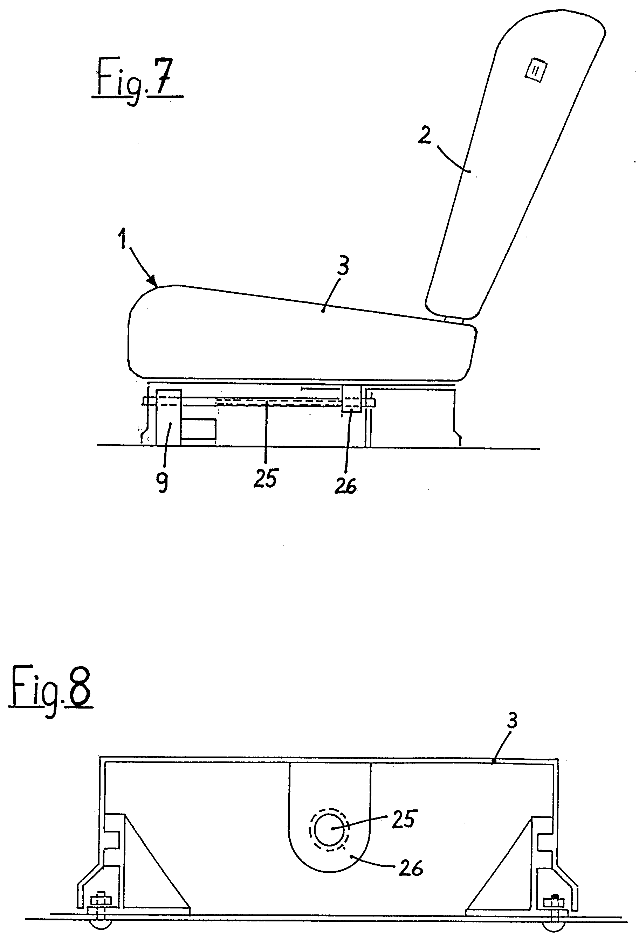

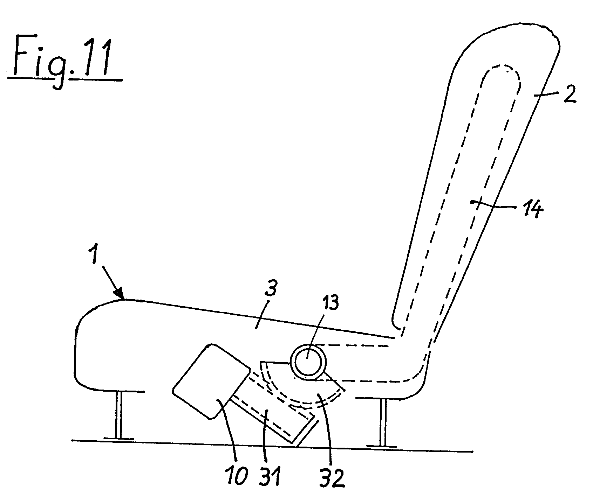

Antriebe für die automatisierte Bewegung des Sitzes 1 und der Rückenlehne sind in den Figuren 7 - 11 dargestellt. Danach kann zum Längsverfahren des Sitzes 1 ein Spindeltrieb 9 vorgesehen sein mit einer motorisch angetriebenen Spindel 25, die im wesentlichen in Richtung der Längsverschiebung parallel zum Boden 4 des Fahrzeugs 5 ausgerichtet ist und in eine am Unterteil 3 des Sitzes 1 angebrachte Mutter 26 derart eingreift, daß durch die Drehbewegung der Spindel 25 die Mutter 26 und somit der ganze Sitz 1 längsverfahren werden. Wie aus Fig. 8 ersichtlich, überdeckt das Sitz-Unterteil 3 die Befestigungsschrauben der Führungsschienen des Sitzes.

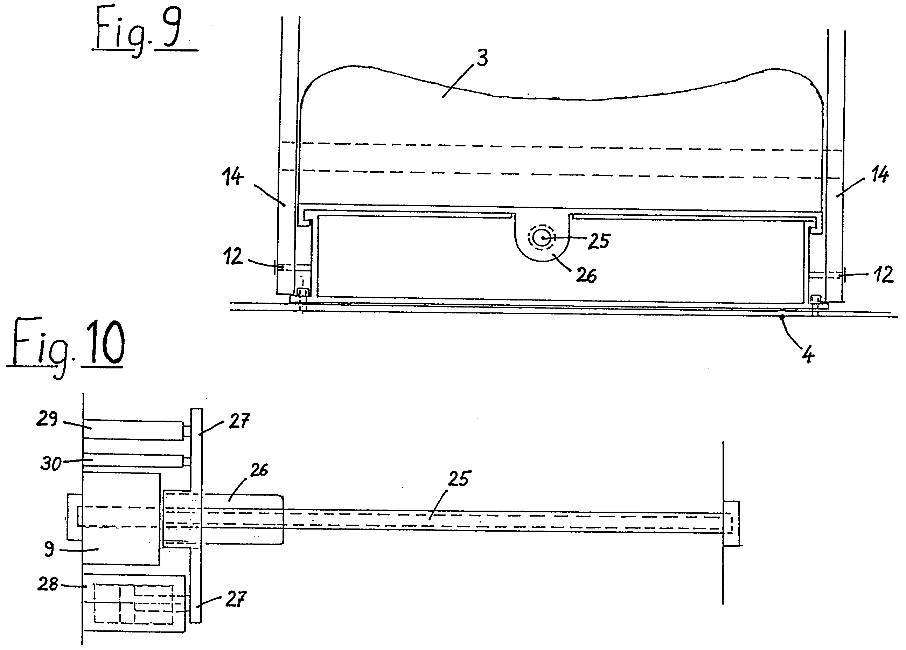

In dem in Figur 9 gezeigten Ausführungsbeispiel ist ein derartiger Antrieb mit Spindel 25 und Mutter 26 kombiniert mit ersten und zweiten Führungsmitteln 11, 12, wie im Zusammenhang mit Fig. 1 und 2 beschrieben, um beim Verfahren des Sitzes 1 gleichzeitig die Rückenlehne 2 vorzuschwenken.

In einem weiteren Ausführungsbeispiel gemäß Fig. 10 sind an der Mutter 26 Betätigungsorgane 27 angebracht, welche beim Verfahren des Sitzes 1 in die Sicherungsstellung in Kontakt mit einem hydraulischen Zylinder 28 und/oder einem oder mehreren Endschaltern 29, 30 kommen. Durch den hydraulischen Zylinder 28 wird das zentrale Bremssystem des Fahrzeugs 5 aktiviert, während mit den Endschaltern 29, 30 Stromkreise unterbrochen werden. Der Endschalter 30 unterbricht z. B. den für den Antrieb des Fahrzeugmotors benötigten Strom und der Endschalter 29 den Gesamtstrom des Fahrzeugs 5.

Alternativ kann auch der Standstrom für das Fahrzeug 5 unbeeinflußt bleiben, wobei dann die für Beleuchtung, eine evtl. vorhandene Klimaanlage, eine Uhr und weitere im Stand betätigbare Aggregate benötigte elektrische Energie weiter zur Verfügung steht.

Die motorische Bewegung der Rückenlehne 2 wird im Ausführungsbeispiel nach Fig. 12 durch einen Schneckentrieb 10 bewirkt, dessen Schnecke 31 in Eingriff mit einem Schneckenrad 32 steht, welches mit dem Rahmen oder der Halterung der Rückenlehne 2 drehfest verbunden ist und Drehbewegungen auf die Rückenlehne 2 überträgt. Gleichzeitig kann derselbe Antrieb 10, z. B. über eine Schraubenspindel 25 und Mutter 26, den Sitz 1 verfahren.

Die vorstehend beschriebenen motorischen bzw. automatisierten Vorgänge können in bekannter Weise durch Sensoren, welche das Abschließen und/oder ordnungsgemäße Aufschließen der Türen erkennen, ausgelöst werden. Hierbei registrieren weitere, in dem Sitz 1 angeordnete Sensoren, ob sich auf dem Sitz 1 Gegenstände oder Personen befinden, und sperren in diesem Fall dessen motorische Bewegung. Das Verfahren des Sitzes in die Sicherungsstellung kann auch mit Zeiverzögerung allein durch die im Sitz angeordneten Sensoren ausgelöst werden. Beim Aufschließen der Türen werden die Verriegelungen automatisch gelöst und der Sitz bzw. die Sitze in die Normalstellung zurückbewegt. Diese läßt sich in herkömmlicher Weise variieren, um eine individuelle Sitzeinstellung zu gewährleisten.

## Patentansprüche

1. Diebstahlsicherung für ein Fahrzeug mit wenigstens einem hinter Funktionselementen kraftbetätigt längsverschieblichen Sitz (1), welcher mit vorgeschwenkter Rückenlehne (2) in einer vorderen Stellung, in welcher ein oder mehrere Funktionselemente (6, 7) unzugänglich und/oder funktionsunfähig sind, gegen unbefugtes Lösen gesichert arretierbar ist, **dadurch gekennzeichnet**, daß die Rückenlehne (2) des Sitzes (1) durch seinen Verschiebeantrieb (9, 10) verschwenkbar ist.

2. Diebstahlsicherung nach Anspruch 1, **dadurch gekennzeichnet**, daß an der Rückenlehne (2) erste Führungsmittel (11) angebracht sind, die beim Vorschieben des Sitzes (1) mit zweiten Führungsmitteln (12) zusammenwirken und die Rückenlehne (2) aus einer im wesentlichen aufrechten Stellung mit der Oberkante in Richtung zu den Funktionselementen (6, 7) hin verschwenken.

3. Diebstahlsicherung nach Anspruch 2, **dadurch gekennzeichnet**, daß die ersten Führungsmittel (11) aus einem Vorsprung (14) an der Rückenlehne (2), welcher über ihr Schwenklager (13) hinaus nach unten ragt, und die zweiten Führungsmittel (12) aus einem am Fahrzeugboden (4) oder einem Sockel des Sitzes (1) gelagerten Halteteil (12) bestehen, welches in Eingriff mit dem Vorsprung (14) dessen Vorschub relativ zu dem des mit dem Sitz (1) vorfahrenden Schwenklagers (13) begrenzt.

4. Diebstahlsicherung nach Anspruch 3, **dadurch gekennzeichnet**, daß das Halteteil (12) ein Festanschlag, z. B. in Form eines Bolzens, ist, welcher beim Vorfahren des Sitzes mit einer nach unten offenen Ausnehmung (11) in dem Vorsprung (14) an der Rückenlehne (2) in Eingriff gelangt.

5. Diebstahlsicherung nach einem der Ansprüche 1 bis 4, **dadurch gekennzeichnet**, daß der Sitz (1) durch eine in Sperrstellung zu sichernde Klinke (8) arretierbar ist und/oder der kraftbetätigte Antrieb ein selbsthemmendes Übertragungselement (9, 10) enthält.

6. Diebstahlsicherung nach Anspruch 5, **dadurch gekennzeichnet**, daß der Sitz (1) und/oder die Rückenlehne (2) durch einen selbsthemmenden Spindel- oder Schneckentrieb (9, 10) bewegbar sind.

7. Diebstahlsicherung nach einem der Ansprüche 1 bis 6, **dadurch gekennzeichnet**, daß das Schwenklager (13) der Rückenlehne (2) ein äußeres Führungsrohr (15) und ein in diesem koaxial angeordnetes Halterungsrohr (16) aufweist, in welchem eine federnd vorgespannte Klinke (8) radial verschieblich gelagert ist und durch eine Ausnehmung im Halterungsrohr (16) hindurch in den Schwenkstellungen zugeordnete Ausnehmungen (17, 17b) des Führungsrohres (15) eingreift, und daß die Klinke (8) durch einen an der Rückenlehne (2) angebrachten, durch ein Schloß (22) sperrbaren Entriegelungshebel (21), mit welchem sie über einen Bowdenzug (19) und Kopplungsglieder (18) verbunden ist, manuell lösbar ist.

8. Diebstahlsicherung nach einem der Ansprüche 1 bis 7, **dadurch gekennzeichnet**, daß in dem Sitz (1) Sensoren angeordnet sind, welche eine Belastung des Sitzes (1) durch Gegenstände oder Personen registrieren, daß nach dem Verlassen des Sitzes (1) oder beim Abschließen einer Fahrzeugtür der Sitz (1) automatisch in die arretierte Stellung bewegbar ist, und daß der arretierte Sitz (1) durch Entriegeln einer Fahrzeugtür oder eines im Fahrzeuginnenraum angebrachten Schlosses (22) entriegelbar und zurückbewegbar ist.

9. Diebstahlsicherung nach Anspruch 7 oder 8, **dadurch gekennzeichnet**, daß die Arretierung des Sitzes (1) durch ein elektronisches Schloß (22) gesichert ist, welches mit Magnetkontakten versehen ist oder auf einem Datenträger gespeicherte Daten ausliest.

10. Diebstahlsicherung nach einem der Ansprüche 1 bis 9, **dadurch gekennzeichnet**, daß durch den Sitz (1) in seiner arretierten Stellung das Bremssystem (28) und/oder die Stromversorgung (29, 30) des Fahrzeugs beeinflußt ist.
